**Europäisches Patentamt**

**European Patent Office**

**Office européen des brevets**

(19)

(11) Veröffentlichungsnummer: **0 051 154**

**A1**

(12) **EUROPÄISCHE PATENTANMELDUNG**

(21) Anmeldenummer: **81107870.8**

(22) Anmeldetag: **02.10.81**

(51) Int. Cl.³: **G 06 F 7/38**
**G 06 F 7/48**

(30) Priorität: **30.10.80 DE 3040931**

(43) Veröffentlichungstag der Anmeldung:
**12.05.82 Patentblatt 82/19**

(84) Benannte Vertragsstaaten:
**AT BE CH FR GB IT LI NL SE**

(71) Anmelder: **SIEMENS AKTIENGESELLSCHAFT**
**Postfach 22 02 61**
**D-8000 München 22(DE)**

(72) Erfinder: **Katsaros, Damianos**
**Untere Parkstrasse 19**
**D-8013 Haar(DE)**

(72) Erfinder: **Schachtner, Johann**
**Thalkirchner Strasse 129**
**D-8000 München 70(DE)**

(72) Erfinder: **Schöbel, Dieter, Dipl.-Ing.**
**Euckenstrasse 42**
**D-8000 München 70(DE)**

(54) **Verfahren und Anordnung zur Verknüpfung von Operanden variabler Länge in Datenverarbeitungsanlagen.**

(57) Zur Verknüpfung von Operanden mit verkürzter Länge gegenüber der Verarbeitungsbreite der arithmetisch/logischen Verknüpfungseinheit (ALU) werden die bereitgestellten Operandeninformationen (INF1, INF2) über Maskeneinrichtungen (MASK A, MASK B) zugeführt, von denen eine (MASK A) operationsabhängig in der Weise steuerbar ist, daß bei einer Addition alle nicht zum Operanden (OP1) gehörenden Verknüpfungsgrößen der Operandeninformation (INF1) in den Höchstwert umgewandelt werden, während die andere Maskeneinrichtung (MASK B) die nicht zum Operanden (OP2) gehörenden Verknüpfungsgrößen in den Niedrigstwert abwandelt. Dadurch ist trotz Verwendung einer unstrukturierten Verknüpfungseinheit (ALU) eine Übertragsfortleitung über die gesamte Verarbeitungsbreite ohne Eingriff möglich. Weitere Ergebnisanzeigen können durch die äußere Beschaltung der Verknüpfungseinheit abgeleitet werden.

Eine Auswahleinrichtung (AW) am Ausgang der Verknüpfungseinheit (ALU) ermöglicht das Ausblenden des gültigen Ergebnisfeldes (T-ERG) und ein Auffüllen auf volle Verarbeitungsbreite durch die restliche Operandeninformation (INF1) des bestimmenden ersten Operanden.

Zusätzliche Maskeneinrichtung (MASK C) zwischen der Verknüpfungseinheit (ALU) und der Auswahleinrichtung (AW) sichert die Ausführung von Zusatzinformationen (INSERT, EXTRACT).

FIG 1

SIEMENS AKTIENGESELLSCHAFT          Unser Zeichen
BERLIN UND MÜNCHEN                   VPA 80 P 2 0 8 8 E

Verfahren und Anordnung zur Verknüpfung von Operanden
variabler Länge in Datenverarbeitungsanlagen

Die Erfindung betrifft ein Verfahren und eine Anordnung
zur Verknüpfung von Operanden variabler Länge in Datenverarbeitungsanlagen durch eine arithmetisch/logische Verknüpfungseinheit in Verbindung mit Verschiebeeinrichtungen zur gegenseitigen Ausrichtung der Operanden und Maskeneinrichtungen, wobei die einzelnen Operanden aus einer
variablen Anzahl von Verknüpfungsgrößen, z.B. Bits oder
Digits zu je vier Bit, bestehen und jede Verknüpfungsgröße Höchst- und Niedrigstwerte, z.B."1"und"0" je Bit
"F"und"0" je Binärdigit oder "9"und"0" je Dezimaldigit,
umfaßt.

Die Verknüpfung von Operanden durch eine arithmetisch/
logische Verknüpfungseinheit ist allgemein problemlos,
wenn die Operandenlänge mit der Breite der Register und
der Verarbeitungsbreite der Verknüpfungseinheit übereinstimmt. Vielfach weicht jedoch die Operandenlänge von
der Verarbeitungsbreite ab, und die Lage der Operanden
zueinander und innerhalb der Verarbeitungsbreite ist
unterschiedlich.

Die unterschiedliche Lage der Operanden zueinander kann
durch gegenseitiges Ausrichten, z.B. durch entsprechendes vorheriges Verschieben des einen Operanden, vorzugsweise des zweiten Operanden, ausgeglichen werden. Sind
die Operanden länger als die Verarbeitungsbreite und
z.B. byteweise, z.B. 8 Bit je Byte, strukturiert, so
werden z.B. bei einer Verarbeitungsbreite von einem Byte die einzelnen Bytes nacheinander verarbeitet. Sind dagegen die Operanden kürzer als die Verarbeitungsbreite, z.B. 2 Byte gegenüber 4 Bytes, wie z.B. bei der Anordnung nach der DE-OS 28 06 452, so müssen die nicht benötigten Bytes ausgeblendet werden, was durch eine Maskeneinrichtung gesteuert wird.

Das Ausblenden nicht benötigter Bytes setzt aber voraus, daß die arithmetisch/logische Verknüpfungseinheit in ihrer Verarbeitungsbreite veränderbar ist, also entsprechend "strukturiert" und damit in gleichartige Teileinheiten unterteilt ist, z.B. je Bit oder je Digit mit jeweils 4 Bit oder je Byte mit jeweils 8 Bit, die einzeln auswählbar und wirksam schaltbar sind, damit die mit einer Verknüpfung verbundenen Ergebnisanzeigen der Verknüpfungseinheit, z.B. Übertrag, Ergebnis nicht gleich Null, auch einwandfrei gebildet werden können.

Auch ergeben sich Schwierigkeiten daraus, daß beim Ergebnistransfer das Zielregister nicht in voller Breite überschrieben werden kann, wenn das gültige Verknüpfungsergebnis kürzer als die Verarbeitungsbreite der arithmetisch/logischen Verknüpfungseinheit ist.

Der Aufwand für eine Verknüpfungseinheit mit veränderbarer Verarbeitungsbreite gegenüber einer mit konstanter Verarbeitungsbreite ist erheblich. Außerdem erfordert das partielle Einschreiben des verkürzten Verknüpfungsergebnisses in das Zielregister eine zusätzliche Taktsteuerung. Aufgabe der Erfindung ist es daher, ein Verfahren und eine Anordnung anzugeben, das bzw. die für die Verknüpfung zweier Operanden mit unterschiedlicher Lage zueinander und mit abweichender Länge von der konstanten Verarbeitungsbreite einer nicht unterteilten Verknüpfungseinheit weniger Aufwand erfordert.

Dies wird bei einem Verfahren gemäß der Erfindung dadurch erreicht, daß bei Verwendung einer Verknüpfungseinheit mit konstanter Verarbeitungsbreite für eine fest vorgegebene Anzahl von Verknüpfungsgrößen beide Operanden der Verknüpfungseinrichtung jeweils über eine Maskeneinrichtung zugeführt werden, daß eine der Maskeneinrichtungen operationsabhängig steuerbar ist und die jeweils nicht zum Operanden gehörenden Verknüpfungsgrössen bei einer Addition in den Höchstwert, z.B. "1111" bei binärer Addition, "1001" bei dezimaler Addition, und bei allen übrigen Verknüpfungsoperationen in den Niedrigstwert umwandelt, während die andere Maskeneinrichtung die nicht zum Operanden gehörenden Verknüpfungsgrößen in den Niedrigstwert umwandelt.

Die den beiden Operandeneingängen der arithmetisch/logischen Verknüpfungseinheit vorgeschalteten Maskeneinrichtungen arbeiten also/nicht allein in der Weise, daß von einer vorgegebenen Maske abhängig einzelne Bitstellen durchgelassen werden oder nicht, wobei ausgeblendete Bitstellen zu Null werden, sondern eine der Maskeneinrichtungen ist operationsabhängig gesteuert und bei der Ausführung bestimmter Funktionen, nämlich bei der binären und der dezimalen Addition, werden die nicht zum Operanden gehörenden Informationsteile nicht einfach zu Null, sondern sie werden je Verknüpfungsgrösse in den jeweiligen Höchstwert abgewandelt. Auf diese Weise wird ein Eingangsübertrag der Verknüpfungseinheit bis zum Anfang des gültigen Operandenfeldes und ein Ausgangsübertrag vom Ende des Operandenfeldes bis zum Übertragsausgang der Verknüpfungseinheit ohne weiteres weitergeleitet, ohne daß ein Eingriff in die Verknüpfungseinheit hinter jeder Verknüpfungsgröße notwendig ist. Die Verknüpfungseinheit arbeitet also unabhängig von der tatsächlichen Operandenlänge immer in ihrer vollen Verknüpfungsbreite und braucht daher nicht strukturiert zu sein. Dennoch wird die übliche Übertragsanzeige ohne
Eingriff bereitgestellt. Weitere Anzeigen können notfalls durch äußere Beschaltung abgeleitet werden,
so z.B. "Ergebnis nicht gleich Null (NZD)" durch Überwachung der den Ergebnisoperanden liefernden Ergebnisleitungen.

Ausgehend von diesem Grundprinzip läßt sich gemäß einer
Weiterbildung der Erfindung auch der Ergebnistransfer mit
voller Verarbeitungsbreite durchführen, wenn zu Beginn
eines jeden Verknüpfungszyklus die den ersten Operanden
umfassende und eine Verarbeitungsbreite ausmachende Gesamtinformation in ein Zwischenregister überführt wird,
wenn anschließend der dem Verknüpfungsergebnis der beiden Operanden entsprechende Teil der Gesamtinformation
durch das von der Verknüpfungseinrichtung bereitgestellte
Verknüpfungsergebnis ersetzt und die so geänderte Gesamtinformation an das Zielregister weitergeleitet wird.

Eine vorteilhaftere Lösung besteht gemäß einer anderen
Weiterbildung der Erfindung darin, daß bei jeder Verknüpfung die nicht den ersten Operanden bildenden Informationsteile der vom entsprechenden Register bereitgestellten und eine Verarbeitungsbreite ausmachenden
Gesamtinformation unmittelbar an den Ausgang der Verknüpfungsanordnung weitergeleitet werden und daß der
den ersten Operanden bildende Teil durch das von der
arithmetisch/logischen Verknüpfungseinheit abgeleitete
Teilergebnis aufgefüllt wird. Bei dieser Lösung kann
das Endergebnis auf statischem Wege in einem einzigen
Verarbeitungsschritt abgeleitet werden, so daß auf
einen zusätzlichen Zwischentakt ganz verzichtet werden
kann.

Außerdem besteht in beiden Fällen die Möglichkeit, durch eine am Ausgang der arithmetischen/logischen Verknüpfungseinheit vorgesehene weitere Maskeneinrichtung zusätzliche Operationsfunktionen zu steuern. Solche Zusatzfunktionen können in einer Einsetzfunktion bestehen, bei
der die durch die Maskeneinrichtung am Ausgang der arithmetisch/logischen Verknüpfungseinheit bezeichneten Bitstellen durch die Werte der korrespondierenden Bitstellen des
zweiten Operanden ersetzt werden, während die Werte der
durch die Maskeneinrichtung nicht bezeichneten Bitstellen
des ersten Operanden unverändert bleiben.

Zum Ausführen einer Extraktfunktion werden dagegen die
durch die operationsabhängige Maskeneinrichtung festgelegten Bitstellen für den ersten Operanden auf Null gesetzt und die Werte der durch die Maskeneinrichtung am
Ausgang der arithmetisch/logischen Verknüpfungseinheit
bezeichneten Bitstellen durch die Werte der korrespondierenden Bitstellen des zweiten Operanden ersetzt.

Eine Anordnung zur Durchführung dieser Verfahren, bestehend aus einer arithmetisch/logischen Verknüpfungseinheit von konstanter Verarbeitungsbreite, aus wenigstens
zwei Registern mit entsprechender Verarbeitungsbreite
zur Bereitstellung der beiden Operandeninformationen
und aus einer dem Register für die zweite Operandeninformation nachgeschalteten Verschiebeeinrichtung zur
Ausrichtung des zweiten Operanden auf den ersten Operanden, ist erfindungsgemäß dadurch gekennzeichnet, daß
jedem Register eine Maskeneinrichtung unmittelbar nachgeschaltet ist, daß die Maskeneinrichtungen Einrichtungen
zur Auswahl der jeweils die Operanden bildenden Informationsteile innerhalb der von den Registern jeweils bereitgestellten Operandeninformationen abhängig von Steuerinformationen zur Lokalisierung der Operanden und Einrichtungen zur Änderung der übrigen Informationsteile aufweisen, und daß die Ergebnisausgänge der Verknüpfungseinheit mit einer Auswahleinrichtung verbunden sind, die analog den Einrichtungen zur Lokalisierung des die Ergebnisbreite bestimmenden Operanden steuerbar ist.

Weitere Einzelheiten der Erfindung ergeben sich aus den übrigen Unteransprüchen und der nachfolgenden Beschreibung eines Ausführungsbeispieles anhand der Zeichnungen. Im einzelnen zeigen:

FIG 1    das Blockschaltbild einer Anordnung gemäß der Erfindung,

FIG 2    den Aufbau der operationsabhängigen Maskeneinrichtung bei der Anordnung nach FIG 1,

FIG 3    das Blockschaltbild der Maskeneinrichtung am Ausgang der Verknüpfungseinheit bei der Anordnung nach FIG 1,

FIG 4 bis FIG 6    Verknüpfungsbeispiele für die Anordnung nach FIG 1 bis 3 und

FIG 7    ein Beispiel für die äußere Beschaltung der Verknüpfungseinheit bei der Anordnung nach FIG 1 zur Ableitung von weiteren Ergebnisanzeigen

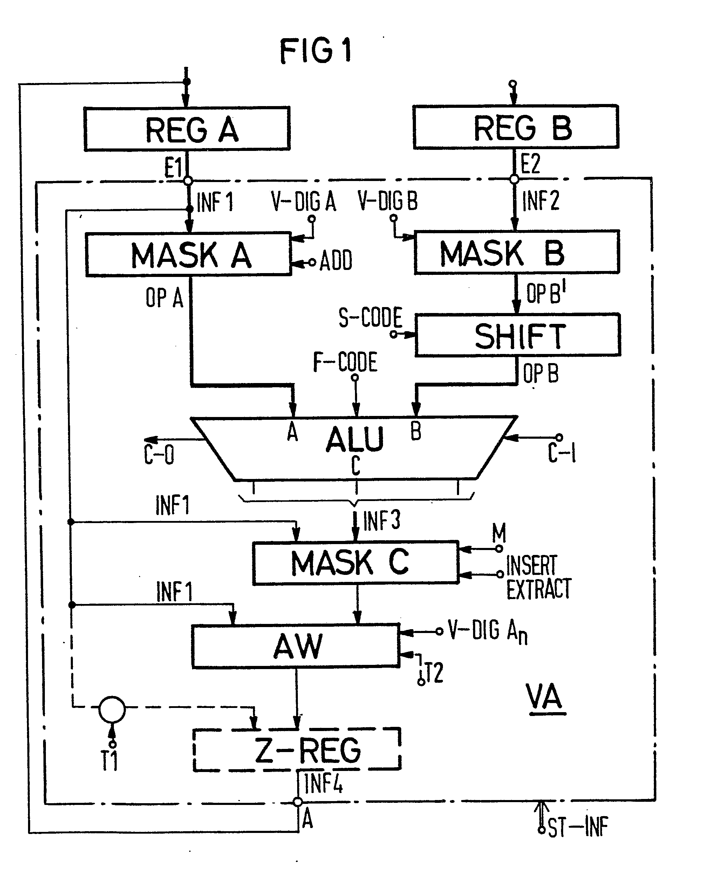

Kernstück der in FIG 1 gezeigten Verknüpfungsanordnung VA ist die arithmetisch/logische Verknüpfungseinheit ALU, die unstrukturiert ist, also nicht in Teileinheiten mit gesonderten Zugriffen unterteilt ist. Diese Verknüpfungseinheit weist eine konstante Verarbeitungsbreite von z.B. 8 Digit zu je 4 Bit mit entsprechend vielen Eingängen A und B für die beiden zu verknüpfenden Operanden und entsprechend viele Ausgänge C für den Ergebnisoperanden auf. Außerdem ist ein Eingang C-I für den Eingangsübertrag und ein Ausgang C-O für den Ausgangsüber-

trag vorgesehen. Im übrigen kann es sich dabei um einen marktüblichen Baustein handeln, der in an sich bekannter Weise aufgebaut ist.

Weitere Bestandteile der Verknüpfungsanordnung VA sind eine über den Eingang E1 für den ersten Operanden ansteuerbare Maskeneinrichtung MASK A, eine über den Eingang E2 für den zweiten Operanden ansteuerbare zweite Maskeneinrichtung MASK B mit nachgeschalteter Verschiebeeinrichtung SHIFT, sowie eine dritte Maskeneinrichtung MASK C am Ausgang der Verknüpfungseinheit ALU mit nachgeschalteter Auswahleinrichtung AW. Zusätzlich kann zwischen der Auswahleinrichtung AW und dem Ausgang A der Verknüpfungsanordnung VA ein Zwischenregister Z-REG angeordnet sein, was gestrichelt angedeutet ist.

Die zu verknüpfenden Operanden werden jeweils durch die Register REG A und REG B bereitgestellt, wobei in an sich bekannter Weise anstelle jeweils eines einzigen Registers auch jeweils mehrere Register vorgesehen sein können, von denen jeweils eines auswählbar ist. Im vorliegenden Falle ist angenommen, daß das Register REG A zugleich Quell- und auch Zielregister ist, so daß der Ausgang A der Verknüpfungsanordnung VA mit dem Eingang dieses Registers verbunden ist.

Die für die Steuerung der einzelnen Bauteile erforderlichen Steuerinformationen ST-INF werden der Verknüpfungsanordnung VA in an sich bekannter Weise von einer nicht dargestellten übergeordneten Steuereinheit zugeführt.

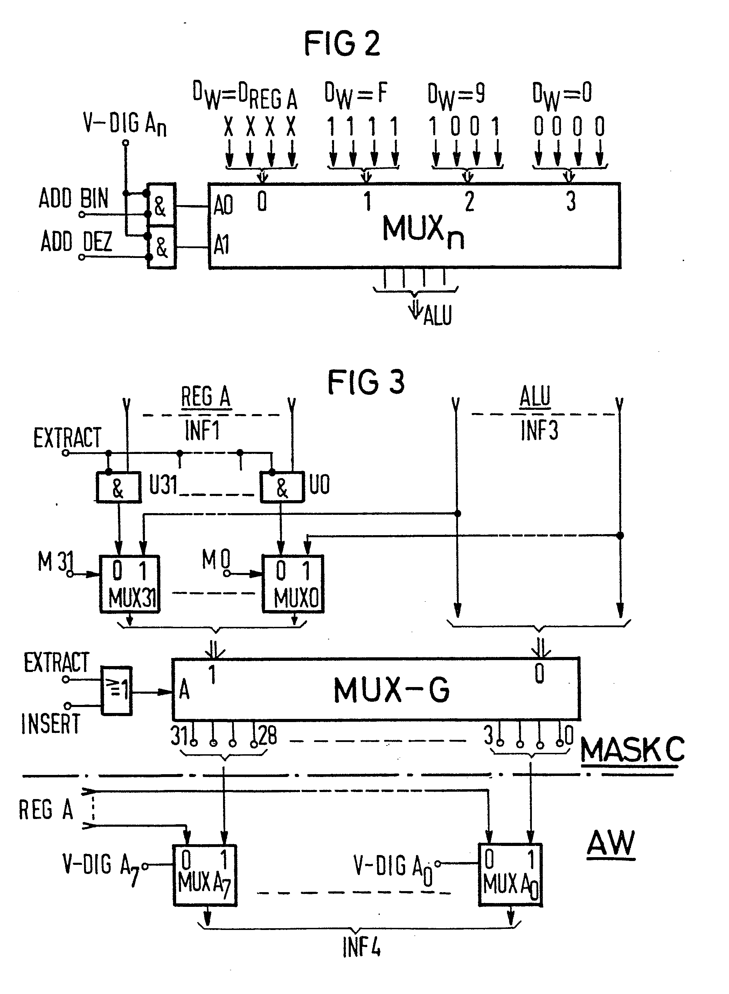

Der Aufbau der ersten Maskeneinrichtung MASK A ergibt sich aus FIG 2. Gezeigt ist hierbei nur eine Teileinheit für ein Digit, so daß bei einer Verarbeitungsbreite der Verknüpfungsanordnung VA von insgesamt 8 Digit acht derartige Teileinheiten die gesamte Maskeneinrichtung MASK A bilden. Die gezeigte Teileinheit besteht aus einem herkömmlichen Multiplexer $MUX_n$ mit vier Eingangsbündeln 0 bis 3 und einem Ausgangsbündel zu je vier Leitungen. Welches der Eingangsbündel jeweils auf das Ausgangsbündel durchgeschaltet wird, wird über die Eingänge AO und A1 gesteuert, denen jeweils ein UND-Glied mit invertierten Eingängen vorgeschaltet ist. Über das Eingangsbündel 0 steht jeweils der vom Register REG A gelieferte Digitwert $D_W = D_{REG A}$ zur Verfügung, während die anderen Eingangsbündel 1 bis 3 den jeweils für die Umwandlung benötigten höchsten oder niedrigsten Digitwert $D_W$ bereitstellen, also als Höchstwerte die Digitwerte $D_W = F$ bei binärer Addition oder $D_W = 9$ bei dezimaler Additon sowie als Niedrigstwert den Digitwert $D_W = 0$.

Gehört das vom Register REG A bereitgestellte Digit zum zu verarbeitenden Operanden, was durch das Gültigkeitssignal V-DIG $A_n$ angezeigt wird, so wird dieses zum Ausgang weitergeleitet. Gehört das vom Register REG A zur Verfügung gestellte Digit nicht zum Operanden, so wird eines der anderen Eingangsbündel 1 bis 3 zum Ausgang durchgeschaltet, und zwar bei Vorliegen des Signales ADD BIN das Bündel 1, bei Vorliegen des Signales ADD DEZ das Bündel 2 und bei allen anderen Funktionen das Bündel 3. Die Eingangsleitungen der Bündel 1 bis 3 sind dabei intern mit einem Steuerpotential beaufschlagt, das die angegebenen Digitwerte $D_W$ in binärer Darstellung ergibt. Der Multiplexer $MUX_n$ und damit die Maskeneinrichtung MASK A arbeiten also operationsabhängig, da zu sperrende Digits des Registers REG A nicht einfach auf 0 gesetzt werden.

Die im zweiten Operandenzweig der Verknüpfungsanordnung VA vorgesehene zweite Maskeneinrichtung MASK B ist dagegen operationsunabhängig, d.h. gesperrte Digits werden also auf Null gesetzt. Je Digit kann also gleichfalls ein Multiplexer vorgesehen sein, allerdings nur mit zwei Eingangsbündeln, die wie die Eingangsbündel 0 und 3 beim Multiplexer $MUX_n$ in FIG 2 beschaltet sind und unter denen das Gültigkeitssignal V-DIG $B_n$ die Auswahl trifft.

Der Aufbau der Maskensteuerung MASK C am Ausgang der Verknüpfungseinheit ALU und der Aufbau der nachgeschalteten Auswahleinrichtung AW ist in FIG 3 gezeigt. Die Maskeneinrichtung MASK C ist nur für die Ausführung von Zusatzfunktionen erforderlich. Im vorliegenden Fall sind das die beiden Zusatzfunktionen INSERT und EXTRACT, die die Maskierung auch einzelner Bits innerhalb eines Digit erfordern. Kernstück dieser Maskeneinrichtung ist ein einfacher Multiplexer MUX-G für zwei Eingangsbündel mit jeweils 32 Leitungen entsprechend der Verarbeitungsbreite der Verknüpfungsanordnung. Die Auswahl unter diesen beiden Eingangsbündeln trifft ein ODER-Glied, das durch die die Sonderfunktion auslösenden Signale INSERT und EXTRACT gesteuert wird. Liegt keine Sonderfunktion vor, fehlen also diese Signale, so werden über das Eingangsbündel 0 die Ergebnisleitungen der Verknüpfungseinheit ALU zum Ausgang durchgeschaltet, im anderen Falle die an das Eingangsbündel 1 angeschlossenen Ergebnissignale. Diese Ergebnissignale werden durch bitweise Verknüpfung der unmittelbar vom Register REG A gelieferten Signale und der von der Verknüpfungseinheit ALU gelieferten Signale gebildet, wobei je Bitleitung ein UND-Glied, z.B. U0, und ein einfacher Multiplexer, z.B. MUX0, mit zwei jeweils einzelnen Eingängen erforderlich sind.

Die UND-Glieder U0 bis U31 sind bei einer Extraktfunktion, gekennzeichnet durch das Eingangssignal EXTRACT, am negierten Eingang gesperrt, so daß die vom Register REG A
gelieferten Binärinformationen zwangsläufig zu Null werden.
Die nachfolgenden Multiplexer MUX0 bis MUX31 ersetzen
diese Nullsignale abhängig von den zugehörigen Maskensignalen M0 bis M31 durch die von der betreffenden Ergebnisleitung der Verknüpfungseinheit ALU kommenden Signale,
so daß im Ergebnis bei einer nichtmaskierten Signalleitung die vom ersten Operandenregister REG A abgeleitete
Information INF1 zu Null wird und bei einer maskierten
Signalleitung die vom ersten Operandenregister REG A abgeleitete Information INF1 durch die von der Verknüpfungseinheit ALU und damit vom zweiten Operandenregister REG B
kommende Information INF3 ersetzt wird.

Soll dagegen eine Einsetzfunktion, gekennzeichnet durch
das Signal INSERT, ausgeführt werden, so wird bei einer
nichtmaskierten Signalleitung die vom ersten Operandenregister REG A gelieferte Information INF1 ungehindert
an die Ausgänge der UND-Glieder U0 bis U31 weitergeleitet und nicht einfach zu Null gesetzt.

Da sich der Einfluß der aufgezeigten Sonderfunktionen jedoch allein auf das durch den ersten Operanden vorgegebene
Informationsfeld innerhalb der vom ersten Operandenregister
REG A gelieferten Information INF1 beschränkt, ist - wie
auch zum Ausblenden des gültigen Ergebnisoperanden bei
gegenüber der Verarbeitungsbreite verkürzter Operandenlänge - eine zusätzliche Auswahlschaltung AW erforderlich,
die abhängig von den den ersten Operanden bestimmenden
Gültigkeitssignalen V-DIG $A_n$ steuerbar ist.

Diese Auswahlschaltung AW besteht also wie die Maskeneinrichtungen MASK A und MASK B aus einer der Anzahl der
die Verarbeitungsbreite ausmachenden Digits entsprechenden Anzahl von Teileinheiten, nämlich 8, wobei jede Teil-

0051154

einheit von einem einfachen Multiplexer, z.B. MUX $A_7$, gebildet wird, der jeweils zwei Eingangsbündel O und 1 mit je vier Eingängen zur Darstellung jeweils eines Digit aufweist. An das eine Eingangsbündel O sind jeweils die korrespondierenden Ausgänge des ersten Operandenregisters REG A und an das andere Eingangsbündel 1 jeweils die korrespondierenden Ausgänge des Multiplexers MUX-G der Maskeneinrichtung MASK C angeschlossen, so daß bei Vorliegen des zugehörigen Gültigkeitssignales V-DIG $A_n$ das Digit vom vorgeordneten Multiplexer MUX-G oder bei fehlendem Gültigkeitssignal das vom Operandenregister REG A angelieferte Digit weitergeleitet wird.

Kann auf die Ausführung von Sonderfunktionen verzichtet werden, so entfällt die Maskeneinrichtung MASK C und die Ergebnisausgänge der Verknüpfungseinheit ALU können direkt mit den korrespondierenden Eingängen der Auswahlschaltung AW verbunden werden.

Bei den Schaltungsbeispielen nach FIG 2 und FIG 3 in Verbindung mit FIG 1 ist davon ausgegangen, daß kein Zwischenregister Z-REG, wie in FIG 1 gestrichelt angedeutet, erforderlich ist, also vom Ergebnisoperanden auszufüllende Teile der vom ersten Operandenregister REG A bereitgestellten Informationen INF1 nicht erst wieder gelöscht und dann erneut überschrieben werden müssen, um die eigentliche Ausgangsinformation INF4 der Verknüpfungsanordnung VA zu erhalten. Die gesamte Ausgangsinformation INF4 kann vielmehr mit einem einzigen Arbeitsschritt auf statischem Wege abgeleitet und somit die Folge Lesen-Verknüpfen-Schreiben bei voller Verarbeitungsbreite in einem Zyklus durchgeführt werden.

Wie in FIG 1 gestrichelt angedeutet, kann bei Verwendung eines Zwischenregisters Z-REG zunächst die gesamte Information INF1 des ersten Operandenregisters REG A in das Zwischenregister Z-REG übernommen werden (Zeitpunkt T1), und erst im Anschluß daran (Zeitpunkt T2) wird das Operandenergebnis durch Überschreiben des entsprechenden Informationsfeldes in das Zwischenregister Z-REG übernommen und damit die eigentliche Ausgangsinformation INF 4 erhalten, die mit voller Verarbeitungsbreite in das Zielregister, im vorliegenden Falle das Register REG A, übertragen werden kann. Das erfordert aber eine zeitliche Auflösung und damit einen Zusatztakt. Die in FIG 3 gezeigte Auswahlschaltung AW ist dann entsprechend abzuändern, da lediglich die gültigen Ergebnissignale des Multiplexers MUX-G bzw. der Verknüpfungseinheit ALU zu berücksichtigen sind. Diese müssen aber in aktive Setz- und Rücksetzsignale im Bereich des gültigen Operandenfeldes umgesetzt werden, damit vom Register REG A gesetzte Bits im Zwischenregister Z-REG auch wieder gezielt gelöscht werden können.

Die in FIG 1 dargestellte, bisher aber nicht näher erläuterte Schiebeeinrichtung SHIFT kann in an sich bekannter Weise als Schiebematrix ausgebildet sein, die abhängig von der zugeführten Schiebeinformation S-CODE die Eingangsinformation OP B' nach rechts oder links verschiebt, damit der zweite Operand rechtsbündig zum ersten Operanden ausgerichtet werden kann.

Insgesamt ergibt sich damit für die Anordnung nach FIG 1 folgender Arbeitsablauf:

Sobald die Ausgangsinformationen INF1 und INF2 für einen Verknüpfungsvorgang in den Operandenregistern REG A und REG B bereitstehen und die Steuerinformation ST-INF für die Verknüpfungsanordnung VA vorliegt, werden die Maskeneinrichtung MASK A und MASK B anhand der Gültigkeitssignale V-DIG A und V-DIG B eingestellt, die die gültigen Operanden Digits ausgeblendet und die übrigen Informationsteile wie angegeben abgewandelt. Mit Hilfe der Schiebeeinrichtung SHIFT erfolgt die rechtsbündige Ausrichtung des zweiten Operanden auf den ersten Operanden, so daß der Verknüpfungseinheit ALU die geänderten Informationen OP A und OP B als Verknüpfungsgrößen zugeleitet werden. Das Verknüpfungsergebnis INF3 wird dann über die Maskeneinrichtung MASK C an die Auswahleinrichtung AW weitergeleitet, die das dem ersten Operanden entsprechendeErgebnisfeld aus dem Verknüpfungsergebnis INF3 ausblendet.

Bei der Lösungsvariante mit Zwischenregister Z-REG wird zunächst mit Takt T1 die vollständige Information INF1 des ersten Operandenregisters REG A in das Zwischenregister übernommen und dann mit Takt T2 von der Auswahleinrichtung AW der den Ergebnisoperanden bildende Teil überschrieben.

Bei der Lösungsvarianten mit statischer Steuerung wird die Information INF1 des ersten Operandenregisters REG A parallel zum Verknüpfungsergebnis INF3 der Auswahleinrichtung AW zugeleitet, die abhängig von den Gültigkeitssignalen V-DIG $A_n$ die jeweils benötigten Informationsteile auswählt und weiterleitet, entweder ebenfalls an ein Zwischenregister oder direkt in ein Zielregister, im vorliegenden Falle in das Register REG A.

Soll eine der Zusatzfunktionen INSERT oder EXTRACT ausgeführt werden, so wird die Maskeneinrichtung MASK C am Ausgang der Verknüpfungseinheit ALU wirksam, die die von der Maske M bestimmten Bitstellen beeinflußt.

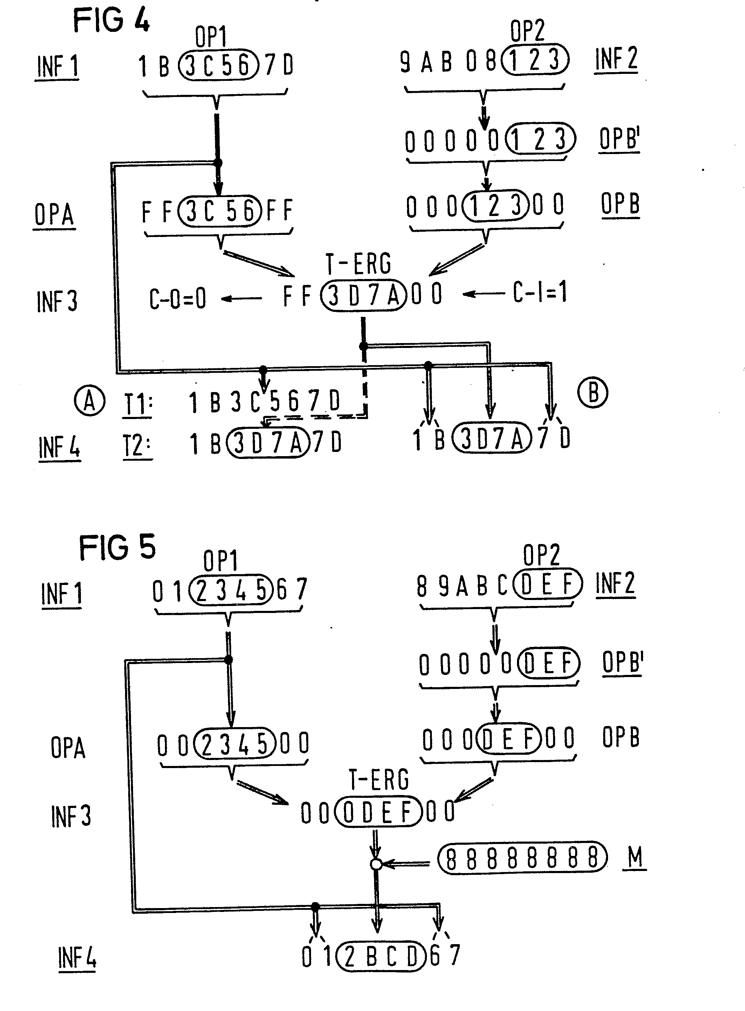

Ein Verknüpfungsbeispiel für eine binäre Addition zeigt FIG 4. Ausgehend von den beiden Informationen INF1 und INF2 der beiden Operandenregister REG A und REG B mit den Operanden OP1 und OP2 werden zunächst durch die Maskeneinrichtungen die Operanden ausgeblendet, wobei bei der Information INF2 alle übrigen Stellen zu "O" werden, während bei der Information INF1 infolge der binären Additionsfunktion alle übrigen Stellen zu "F" werden. Der so entstehende Operand OP A und der nach der Ausrichtung erhaltene Operand OP B werden dann in an sich bekannter Weise unter Berücksichtigung des Eingangsübertrages C-I addiert, wodurch das Verknüpfungsergebnis INF3 mit dem dem ersten Operanden OP1 entsprechenden Teilergebnis T-ERG entsteht. Dieses Teilergebnis bildet mit den übrigen vom Register REG A unverändert übernommenen Teilinformationen die Ergebnisinformation INF4 mit einer der vollen Verarbeitungsbreite entsprechenden Länge. Durch die gestrichelten Ergebnislinien sind dabei die beiden möglichen Varianten zur Ergebnisbildung - wie bereits erläutert - angedeutet.

Bei einer Subtraktion werden wie bei allen übrigen Operationsfunktionen die nicht benötigten Informationsstellen der Information INF1 zu Null. Durch die interne Komplimentbildung des zweiten Operanden in der Verknüpfungseinheit ergeben sich jedoch die gleichen Verhältnisse wie bei einer Addition.

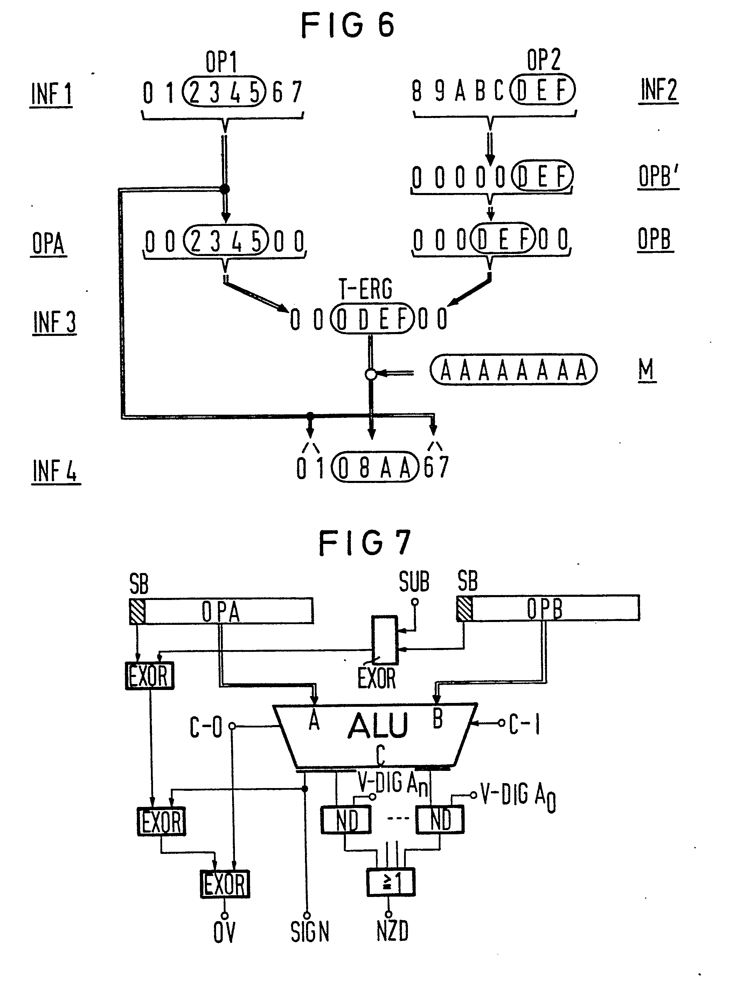

Die Einsetzfunktion INSERT sei anhand von FIG 5 erläutert. In diesem Falle wird die Ergebnisbildung durch die Maskeneinrichtung MASK C am Ausgang der Verknüpfungseinheit ALU mit der Maske M beeinflußt. Dabei wird nur das von der Verknüpfungseinheit ALU gelieferte Teilergebnis T-ERG möglicherweise verändert, und zwar bitweise. Dem Wert "8" je Stelle der Maske M entspricht die Bitkombination "1000", und nur die mit einer "1" maskierten Bitstellen des Teilergebnisses T-ERG werden von der Maske ungehindert durchgelassen, während die mit einer "O" maskierten Bitstellen von der Information INF1 abgeleitet werden. Bei der niedrigsten Stelle des Teilergebnisses T-ERG mit dem Wert "F" entsprechend einer Bitkombination "1111" wird daher nur die Information "1" der höchstwertigen Stelle infolge der Maskierung durchgelassen, während die Informationen für die drei niedrigstwertigen Bitstellen von der Information INF1 abgeleitet werden. Die korrespondierende Digitstelle dieser Information INF1 hat den Wert 5 entsprechend einer Bitkombination "0101", so daß sich die Ergebniskombination "1101" entsprechend dem Wert "D" ergibt. Analoges gilt für die übrigen maskierten Digitstellen des Teilergebnisses T-ERG.

Bei der in FIG 6 dargestellten Funktion EXTRACT arbeitet die Maskeneinrichtung MASK C ähnlich, allerdings mit dem Unterschied, daß eine nichtmaskierte Bitstelle zu Null wird. Bei dem Wert "A" entsprechender Bitkombination "1010" folgt daher aus dem Wert "F" mit der Bitkombination "1111" die Ergebniskombination "1010" entsprechend dem Wert "A" oder aus dem Wert "E" mit der Bitkombination "1110" ebenfalls die Ergebniskombination "1010" mit dem Wert "A" usw..

FIG 7 zeigt die Ergänzung der Verknüpfungseinrichtung ALU von FIG 1, wenn eine Ableitung weiterer Ergebnisanzeigen außer dem Ausgangsübertrag C-0 notwendig ist:

Die Ergebnisanzeige NZD - Ergebnis nicht gleich Null - wird durch äußere Verknüpfung der Ergebnisausgänge der Verknüpfungseinheit ALU gewonnen, und zwar unter Ausschaltung der nicht aktiven Stellen, was durch die Gültigkeitssignale V-DIG A... gesteuert wird. Je Verknüpfungsgröße, z.B. für jeweils vier Bit, ist ein Nulldetektor ND erforderlich, der. beispielsweise aus
einem ODER-Glied zur Bündelung der zu überwachenden Ergebnisleitungen und einem von dem Gültigkeitssignal
V-DIG A... gesteuerten UND-Glied besteht. Die Ausgänge
aller Nulldetektoren ND werden dann in an sich bekannter
Weise durch/ODER-Glied zum Ergebnissignal NZD gebündelt.
ein

Die Ableitung des Ergebnissignales OV beim Überlauf erfordert entweder eine programmgesteuerte Zusatzmaßnahme
oder eine zusätzliche Verschiebeeinrichtung für die Information INF1 im Operandenregister REG A vor Ansteuerung der Maskeneinrichtung MASK-A in FIG 1, da
die beiden Operanden OP1 und OP2 nicht nur zueinander,
sondern auch linksbündig ausgerichtet sein müssen, damit
wegen des von der Verknüpfungseinheit ALU nicht ableitbaren Übertrags von der vorletzten zur letzten Bitstelle
eine Ersatzableitung möglich ist.

Ein Überlauf liegt nämlich bekanntlich dann vor, wenn
der Übertrag in das höchstwertige Bit nicht gleich dem
Übertrag aus dem höchstwertigen Bit ist. Unabhängig von
der Verknüpfungseinheit ALU kann man eine Überlaufkontrolle auch dann durchführen, wenn man die höchstwertigen Bit SB beider Operanden OP A und OP B unmittelbar miteinander vergleicht. Sind sie ungleich, so ist
die Summe immer eine "1"; sind sie gleich, so ist
die Summe immer eine "0". Stimmt folglich das höchstwertige Ergebnisbit der Verknüpfungseinheit nicht mit
dieser Summe überein, so hat ein Übertrag in die
letzte Bitstelle vorgelegen. Für die Ableitung dieses
Übertrags sind also zwei exklusive ODER-Glieder EXOR
erforderlich, sowie ein weiteres exklusives ODER-Glied
für die Ableitung des Überlaufsignales OV aus dem
Übertrag in die letzte Bitstelle und aus dem Übertrag
C-0 aus der letzten Bitstelle der Verknüpfungseinrichtung ALU. Für die Ausführung einer Subtraktion ist ein weiteres exklusives ODER-Glied erforderlich. Ein Eingriff in die Verknüpfungseinrichtung ist also auch hierfür nicht erforderlich.

Das Vorzeichen SIGN einer Verknüpfung kann dagegen unmittelbar in an sich bekannter Weise von dem gültigen höchstwertigen Ergebnisbit der Verknüpfungseinrichtung ALU abgeleitet werden.

Insgesamt ist also der Aufwand für zusätzliche Ergebnisanzeigen wesentlich geringer als der Aufwand für eine strukturierte Verknüpfungseinrichtung.

7 Figuren
11 Patentansprüche

Patentansprüche

1. Verfahren zur Verknüpfung von Operanden (OP1 und OP2) variabler Länge in Datenverarbeitungsanlagen durch eine arithmetisch/logische Verknüpfungseinheit (ALU) in Verbindung mit Verschiebungseinrichtungen (z.B. SHIFT) zur gegenseitigen Ausrichtung der Operanden und mit Maskeneinrichtungen (MASK...), wobei die einzelnen Operanden aus einer variablen Anzahl von Verknüpfungsgrößen, z.B. Bits oder Digits zu je vier Bit, bestehen und jede Verknüpfungsgröße Höchst- und Niedrigstwerte, z.B. "1" und "0" je Bit, "F" und "0" je Binärdigit oder "9" und "0" je Dezimaldigit, umfaßt, d a d u r c h   g e k e n n z e i c h n e t , daß bei Verwendung einer Verknüpfungseinheit (ALU) mit konstanter Verknüpfungsbreite für eine fest vorgegebene Anzahl von Verknüpfungsgrößen (z.B. 8 Digit zu je 4 Bit) beide Operanden der Verknüpfungseinrichtung (ALU) jeweils über eine Maskeneinrichtung (MASK A, MASK B) zugeführt werden, daß eine der Maskeneinrichtungen (z.B. MASK A) operationsabhängig steuerbar ist und jeweils nicht zum Operanden (OP1) gehörende Verknüpfungsgrößen bei einer Addition in den Höchstwert ("1111" bei binärerer Addition, "1001" bei dezimaler Addition) und bei allen übrigen Verknüpfungsoperationen in den Niedrigstwert ("0000") umwandelt, während die andere Maskeneinrichtung (MASK B) die nicht zum Operanden (OP2) gehörenden Verknüpfungsgrößen in den Niedrigstwert ("0000") umwandelt.

2. Verfahren nach Anspruch 1, d a d u r c h   g e k e n n z e i c h n e t , daß der die Verknüpfungs- und Ergebnisbreite bestimmende erste Operand (OP1) über die operationsabhängige Maskeneinrichtung (MASK A) der Verknüpfungseinrichtung (ALU) direkt zugeleitet wird, während der andere Operand (OP2) nach dem Durchlaufen der anderen Maskeneinrichtung (MASK B) zum Ausrichten auf
den ersten Operanden (OP1) erst der Verschiebeeinrichtung
(SHIFT) zugeführt wird.

3. Verfahren nach Anspruch 1 oder 2, d a d u r c h
g e k e n n z e i c h n e t , daß zu Beginn eines jeden
Verknüpfungszyklus die den ersten Operanden (OP1) umfassende und eine Verarbeitungsbreite ausmachende Gesamtinformation (INF1) in ein Zwischenregister (Z-REG)
überführt wird und daß anschließend der dem Verknüpfungsergebnis (T-ERG) der beiden Operanden (OP1 und OP2)
entsprechende Teil der Gesamtinformation (INF1) durch
das von der Verknüpfungseinrichtung (ALU) bereitgestellte
Verknüpfungsergebnis (T-ERG) ersetzt und die so geänderte
Gesamtinformation (INF4) an das Zielregister (z.B. REG A)
weitergeleitet wird.

4. Verfahren nach Anspruch 1 oder 2, d a d u r c h
g e k e n n z e i c h n e t , daß bei jeder Verknüpfung
die nicht den ersten Operanden (OP1) bildenden Informationsteile der vom entsprechenden Register (REG A) bereitgestellten und eine Verarbeitungsbreite ausmachenden
Gesamtinformation (INF1) unmittelbar an den Ausgang (A)
der Verknüpfungsanordnung (VA) weitergeleitet werden
und daß der den ersten Operanden (OP1) bildende Teil
durch das von der arithmetisch/logischen Verknüpfungseinheit (ALU) abgeleitete Teilergebnis (T-ERG) aufgefüllt wird.

5. Verfahren nach Anspruch 3 oder 4, d a d u r c h
g e k e n n z e i c h n e t , daß durch eine am Ausgang
der Verknüpfungseinheit (ALU) vorgesehene weitere Maskeneinrichtung (MASK C) zusätzliche Operationsfunktionen
(INSERT, EXTRACT) gesteuert werden.

6. Verfahren nach Anspruch 5, d a d u r c h  g e -
k e n n z e i c h n e t , daß zum Ausführen einer Einsetzfunktion (INSERT) an den durch die Maskeneinrichtung (MASK C) am Ausgang der Verknüpfungseinheit (ALU)
bezeichneten Bitstellen die Werte des ersten Operanden
durch die Werte der korrespondierenden Bitstellen des
zweiten Operanden ersetzt werden, während an den durch
die Maskeneinrichtung nicht bezeichneten Bitstellen
die Werte des ersten Operanden unverändert bleiben.

7. Verfahren nach Anspruch 5 oder 6, d a d u r c h
g e k e n n z e i c h n e t , daß zum Ausführen einer
Extraktfunktion (EXTRACT) die durch die operationsabhängige Maskeneinrichtung (MASK A) festgelegten Bitstellen für den ersten Operanden (OP1) auf Null gesetzt und die Werte der durch die Maskeneinrichtung
(MASK C) am Ausgang der Verknüpfungseinheit (ALU)
bezeichneten Bitstellen durch die Werte der korrespondierenden Bitstellen des zweiten Operanden (OP2)
ersetzt werden.

8. Anordnung zur Durchführung des Verfahrens nach einem
der Ansprüche 1 bis 7, bestehend aus einer arithmetisch/
logischen Verknüpfungseinrichtung (ALU) von konstanter
Verarbeitungsbreite, aus wenigstens zwei Registern
(REG A und REG B) mit entsprechender Verarbeitungsbreite zur Bereitstellung der beiden Operandeninformationen und aus einer dem Register (REG B) für die zweite Operandeninformation nachgeschaltete Verschiebeeinrichtung (SHIFT) zur Ausrichtung des zweiten Operanden
(OP2) auf den ersten Operanden (OP1) d a d u r c h
g e k e n n z e i c h n e t , daß jedem Register (REG A,
REG B) eine Maskeneinrichtung (MASK A bzw. MASK B)
unmittelbar nachgeschaltet ist, daß die Maskeneinrichtungen Einrichtungen zur Auswahl der jeweils die Operanden (OP1, OP2) bildenden Informationsteile innerhalb der von den Registern (REG A, REG B) jeweils bereitgestellten Gesamtinformationen (INF1 bzw. INF2) abhängig von Steuerinformationen (V-DIG A bzw. V-DIG B) zur Lokalisierung der Operanden (OP1, OP2) und Einrichtungen zur Änderung der übrigen Informationsteile aufweisen und daß die Ergebnisausgänge der Verknüpfungseinheit (ALU) mit einer Auswahleinrichtung (AW) verbunden sind, die analog den Einrichtungen zur Lokalisierung des die Ergebnisbreite bestimmenden Operanden (OP1) steuerbar ist.

9. Anordnung nach Anspruch 8, d a d u r c h  g e - k e n n z e i c h n e t , daß der Auswahleinrichtung (AW) ein Zwischenregister (Z-REG) mit gleicher Verarbeitungsbreite wie die Verknüpfungseinrichtung (ALU) nachgeschaltet ist und daß die Eingänge dieses Zwischenregisters (Z-REG) außerdem mit den Ausgängen des den ersten Operanden (OP1) bereitstellenden Registers (REG A) verbunden ist, wobei die Informationen vom Register (REG A) und von der Auswahleinrichtung (AW) nacheinander in das Zwischenregister (Z-REG) übertragen werden.

10. Anordnung nach Anspruch 8, d a d u r c h  g e - k e n n z e i c h n e t , daß die Auswahleinrichtung (AW) zwei getrennte Gruppen von Eingängen aufweist, von denen die der einen Gruppe mit den Ausgängen des den ersten Operanden (OP1) liefernden Registers (REG A) verbunden ist, wobei abhängig von Steuerinformationen (V-DIG $A_n$) für die Lokalisierung des ersten Operanden (OP1) die Ausgänge der Auswahleinrichtung (AW) wahlweise mit den Eingängen der einen oder der anderen Gruppe von Eingängen verbunden werden.

11. Anordnung nach Anspruch 9 oder 10, d a d u r c h
g e k e n n z e i c h n e t , daß zwischen der arith-
metisch/logischen Verknüpfungseinheit (ALU) und der
Auswahleinrichtung (AW) eine weitere Maskeneinrichtung
(MASK C) zur Ausführung von zusätzlichen Operationsfunktionen angeordnet ist und daß diese Maskeneinrichtung von einer Maske (M) und den zusätzlichen Operationsbefehlen (INSERT, EXTRACT) gesteuerte, bitweise
arbeitende Einrichtungen zur Auswahl und Änderung
maskierter Bitstellen der von der Verknüpfungseinheit
(ALU) und von dem den ersten Operanden bereitstellenden Register (REG A) gelieferten Informationen (INF1,
INF3) aufweist.

FIG 1

0051154

2/4

FIG 2

FIG 3

FIG 4

FIG 5

3/4

## FIG 6

INF1

OP1
0 1 (2 3 4 5) 6 7

OP2
8 9 A B C (D E F)    INF2

OPB'
0 0 0 0 0 (D E F)

OPA
0 0 (2 3 4 5) 0 0,

OPB
0 0 0 (D E F) 0 0,

T-ERG
INF3    0 0 (0 D E F) 0 0

M
(A A A A A A A A)

INF4
0 1 (0 8 A A) 6 7

## FIG 7

SB    OPA    SUB    SB    OPB

EXOR    EXOR

A    ALU    B
C-0    C    C-I

EXOR    V-DIG A$_n$    V-DIG A$_0$
ND    - - -    ND

EXOR    ≥1

OV    SIGN    NZD

# EUROPÄISCHER RECHERCHENBERICHT

Europäisches
Patentamt

| | EINSCHLÄGIGE DOKUMENTE | | KLASSIFIKATION DER ANMELDUNG (Int Cl i |
|---|---|---|---|
| Kategorie | Kennzeichnung des Dokuments mit Angabe. soweit erforderlich, der maßgeblichen Teile | betrifft Anspruch | G 06 F 7/38<br>G 06 F 7/48 |
| Y | US - A - 4 001 570 (GOODING)<br><br>* Figur 1; Spalte 2, Zeilen 43-47; Spalte 6, Zeilen 31-37; Spalte 7, Zeile 7 bis Spalte 8, Zeile 9; Spalte 9, Zeilen 9-24; Spalte 10, Zeilen 44-59; Spalte 13, Zeilen 22-36 *<br>--- | 1,4,8 | |
| Y | US - A - 4 021 655 (HEALEY et al.)<br><br>* Figur 1, Zusammenfassung; Spalte 4, Zeilen 63-68 *<br>--- | 1,8 | RECHERCHIERTE SACHGEBIETE (Int Cl ?) |
| P/X | GB - A - 1 593 136 (GUSEV et al.)<br><br>* Figur 1; Seite 1, Zeile 19 bis Seite 2, Zeile 14; Seite 2, Zeile 62 bis Seite 3, Zeile 20; Seite 4, Zeile 31 bis Seite 5, Zeile 34; Seite 6, Zeile 17 bis Seite 7, Zeile 31 *<br><br>--------- | 1,2,8 | G 06 F 7/38<br>G 06 F 7/48 |

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L. aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 16.02.1982 | FORLEN |

EPA form 1503.1   06.78